# EUROPÄISCHE PATENTSCHRIFT

(11) **EP 3 181 434 B1**
(45) Veröffentlichungstag und Bekanntmachung des Hinweises auf die Patenterteilung: **21.03.2018**
(21) Anmeldenummer: 15199837.4
(22) Anmeldetag: 14.12.2015
(51) Int. Cl.: B62H 5/00, E05B 47/00

(54) **ELEKTRONISCHES SICHERUNGSSCHLOSS**
ELECTRONIC SECURING LOCK
VERROU ELECTRONIQUE DE SECURITE

(43) Veröffentlichungstag der Anmeldung: 21.06.2017
(73) Patentinhaber: Deutsche Telekom AG, 53113 Bonn (DE)
(72) Erfinder: Wagner, Jens, 04288 Leipzig (DE); Ludwig, Theresa, 04103 Leipzig (DE)
(74) Vertreter: Braun-Dullaeus Pannen Patent- und Rechtsanwälte

(56) Entgegenhaltungen:
- EP-A2- 1 818 246
- EP-A2- 2 865 835
- DE-U1- 20 211 241
- DE-U1-202014 005 564
- FR-A1- 2 934 984

## Beschreibung

Die vorliegende Erfindung betrifft eine elektronische Sicherungseinheit für ein Zweirad, aufweisend einen Grundkörper und einen Schlosskörper, der in einem Öffnungszustand vom Grundkörper wenigstens teilweise lösbar ist und der in einem Schließzustand am Grundkörper verriegelbar ist, und wobei im Grundkörper eine elektronische Kommunikationseinheit eingerichtet ist, die zur Kommunikation mit einem handhaltbaren Steuergerät ausgebildet ist, mittels dem die Sicherungseinheit wenigstens vom Schließzustand in den Öffnungszustand überführbar ist, und wobei im Grundkörper ein Energiespeicher zur Energieversorgung wenigstens der Kommunikationseinheit vorgesehen ist.

Eine elektronische Sicherungseinheit für ein Zweirad ist beispielsweise aus der DE 20 2014 005 564 U1 bekannt. Die elektronische Sicherungseinheit ist zur Sperrung eines Tretlagers eines Fahrrades ausgebildet und im Rahmen des Fahrrades integriert. Zur Kommunikation mit einem handhaltbaren Steuergerät weist die Sicherungseinheit eine Kommunikationseinheit auf. Zudem weist die Sicherungseinheit einen Energiespeicher auf, um wenigstens die Kommunikationseinheit mit Energie zu versorgen. Die bekannte elektronische Sicherungseinheit dient zur Sperrung des Fahrrades, so dass dieses nicht benutzt werden kann, die elektronische Sicherungseinheit ist jedoch nicht derart ausgebildet, dass diese ein Wegtragen des Fahrrades verhindern kann.

Häufig ist die Energiebereitstellung für eine Kommunikationseinheit einer elektronischen Sicherungseinheit die Schwierigkeit bei der Bereitstellung einer Sicherungseinheit, insbesondere wenn diese beweglich ist und vom Zweirad entnommen werden kann. Ein regelmäßiges Aufladen eines Energiespeichers einer Sicherungseinheit beispielsweise mit oder auf einem Ladegerät ist dann nicht vorteilhaft, wenn die elektronische Sicherungseinheit grundsätzlich am Fahrrad verbleiben muss, insbesondere dann, wenn das Fahrrad abgestellt wird und die elektronische Sicherungseinheit zur Sicherung des Fahrrades eingesetzt werden soll.

Ein weiteres Ausführungsbeispiel einer elektronischen Sicherungseinheit ist aus der EP 1 818 246 A2 bekannt. Die Druckschrift lehrt die Ausbildung einer elektronischen Sicherungseinheit als Ringschloss zur Sicherung des Hinterrades eines Fahrrades, und in an sich bekannter Weise weist die Sicherungseinheit einen drehbaren Bügel auf, der als Bolzen zwischen die Speichen des Hinterrades eingefahren werden kann. Damit ist auch diese Sicherungseinheit fest mit dem Fahrrad verbunden und kann ein Wegtragen des Fahrrades nicht verhindern. Der Vorteil elektronischer Sicherungseinheiten liegt ferner darin, dass das handhaltbare Steuergerät als Mobiltelefon ausgeführt werden kann, so dass für die Sicherungseinheit kein mechanisch wirkender Schlüssel mitgetragen werden muss, ferner muss kein Sicherungscode auswendig gelernt werden.

Als weiteres Ausführungsbeispiel zeigt die DE 10 2004 054 331 A1 eine elektronische Sicherungseinheit für ein Fahrrad mit einem Schlosskörper in Form einer Kabelkonstruktion, und die Kabelkonstruktion kann in ein Loch eines Schlosskastens eingesteckt werden, welcher Schlosskasten einen Grundkörper der Sicherungseinheit bildet. In der Sicherungseinheit ist eine Kommunikationseinheit aufgenommen, die mit einem handhaltbaren Bedienelement kommunizieren kann, um das Schloss zwischen einem Öffnungszustand und einem Schließzustand zu wechseln. Nachteilhafterweise weist die elektronische Sicherungseinheit eine Vielzahl von Öffnungen, Löchern und Einzelteilen auf, die am Rahmen des Fahrrades montiert sind, so dass die Sicherungseinheit manipulationsanfällig ist. EP2865835A2 zeigt eine elektronische Sicherungseinheit für ein Zweirad gemäß des Oberbegriffs des Anspruchs 1.

Aufgabe der Erfindung ist die Weiterbildung einer elektronischen Sicherungseinheit für ein Zweirad, die mit einem handhaltbaren Steuergerät bedient werden kann, und die vom Fahrrad gelöst werden kann. Dabei soll die elektronische Sicherungseinheit mit Bezug auf eine Energieversorgung ortsunabhängig benutzt werden können.
Diese Aufgabe wird ausgehend von einer elektronischen Sicherungseinheit für ein Zweirad gemäß dem Oberbegriff des Anspruches 1 mit den jeweils kennzeichnenden Merkmalen gelöst. Vorteilhafte Weiterbildungen der Erfindung sind in den abhängigen Ansprüchen angegeben.
Die Erfindung schließt die technische Lehre ein, dass die elektronische Sicherungseinheit einen Aufnahmekörper umfasst, wobei der Grundkörper zur haltenden Aufnahme an eine erste Seite des Aufnahmekörpers anordbar ist und durch den der Schlosskörper zur Verriegelung am Grundkörper vor einer gegenüberliegenden zweiten Seite des Aufnahmekörpers hindurchführbar ist, und wobei im Aufnahmekörper eine Ladeeinheit aufgenommen ist, über die der Energiespeicher kabellos aufladbar ist, wenn der Grundkörper am Aufnahmekörper angeordnet ist.
Kern der Erfindung ist ein Aufnahmekörper, welcher zwei Funktionen erfüllt. Eine erste Funktion erfüllt der Aufnahmekörper mit der haltenden Aufnahme des Grundkörpers, und wenn der Schlosskörper am Grundkörper verriegelt ist, nimmt der Aufnahmekörper den Grundkörper und den Schlosskörper verliersicher auf. Eine weitere Funktion erfüllt der Aufnahmekörper mit der integrierten Ladeeinheit, über die der Energiespeicher des Grundkörpers kabellos aufladbar ist. Das Aufladen kann dann erfolgen, wenn der Grundkörper am Aufnahmekörper angeordnet ist.

Entriegelt beispielsweise ein Benutzer des Zweirades die elektronische Sicherungseinheit, so wird der Benutzer den Grundkörper an den Aufnahmekörper anordnen und mit dem Schlosskörper verriegeln. Bewegt der Benutzer das Zweirad, so wird der Energiespeicher über die Ladeeinheit im Aufnahmekörper aufgeladen. Der Energiespeicher ist beispielsweise ein Akkumulator und kann innerhalb eines Gehäuses des Grundkörpers aufgenommen sein.

Durch das kabellose Aufladen des Energiespeichers muss der Grundkörpers nicht mit Steckverbindern und dergleichen ausgeführt werden. Weiterhin weist der Grundkörper keine Schnittstelle für einen Schlüssel auf, da die Kommunikationseinheit mit dem handhaltbaren Steuergerät über eine Funkverbindung kommuniziert. Im Ergebnis wird der Vorteil erreicht, dass die elektronische Sicherungseinheit frei von Öffnungen ausgeführt werden kann, wodurch ein besonderer Widerstand gegen eine Manipulation geschaffen wird. Insbesondere entsteht mit der Ausgestaltung des Grundkörpers der Vorteil, dass das Gehäuse des Grundkörpers ohne Öffnungen vollständig geschlossen und damit hermetisch dicht ausgeführt werden kann. Der Grundkörper muss lediglich die Möglichkeit bieten, den Schlosskörper am Grundkörper zu verriegeln, ein Schließsystem für einen Schlüssel oder ein Ladestecker für die Aufladung des Energiespeichers können mit der erfindungsgemäßen elektronischen Sicherungseinheit jedoch entfallen.

Nach einer weiteren vorteilhaften Ausführungsform der elektronischen Sicherungseinheit ist im Grundkörper eine Ladeeinheit aufgenommen, wobei die Ladeeinheit im Aufnahmekörper eine primäre Ladeeinheit und wobei die Ladeeinheit im Grundkörper eine sekundäre Ladeeinheit bildet, welche Ladeeinheiten elektronmagnetisch miteinander koppelbar sind. Insbesondere dann, wenn der Grundkörper quaderförmig ausgeführt ist, kann dieser an den ebenfalls quaderförmig ausgeführten Aufnahmekörper angeordnet werden, so dass beide Körper eine jeweilige Planfläche aufweisen, die aufeinander liegen. Beispielsweise weist die primäre Ladeeinheit eine Spule auf, die elektromagnetisch gekoppelt wird mit einer Spule, die die sekundäre Ladeeinheit aufweist. Das Prinzip der elektromagnetischen Kopplung ist beispielsweise auch bei elekteischen Haushalts- und Hygienegeräten bekannt, und die Haushaltsgeräte weisen in der Regel einen entnehmbaren Teil auf, der von einer Aufnahmestation entnommen und auf diese wieder aufgesetzt werden kann. Die elektromagnetische Kopplung zwischen der primären Ladeeinheit im stationären Teil und der sekundären Ladeeinheit im entnehmbaren Teil wird immer dann erzeugt, wenn der entnehmbare Teil auf den stationären Teil aufgesetzt wird.

Weiterhin ist es von Vorteil, wenn der Aufnahmekörper über eine elektrische Leitung mit einer Energiequelle verbunden ist. Der Aufnahmekörper ist insbesondere fest am Rahmen des Zweirades angeordnet, beispielsweise eines Fahrrades oder eines Motorrades. Beispielsweise kann das Fahrrad einen Nabendynamo aufweisen, und der Aufnahmekörper ist über eine elektrische Leitung mit dem Nabendynamo verbunden, beispielsweise auf gleiche Weise wie die Beleuchtung eines Fahrrades. Bewegt der Benutzer das Zweirad, so wird über die Energiequelle, also beispielsweise den Nabendynamo, elektrische Energie bereitgestellt, und über die elektromagnetische Kopplung der Ladeeinheiten wird der Energiespeicher mit der Energie aus der Energiequelle geladen. Beispielsweise ist die Energiequelle durch einen Dynamo des Zweirades gebildet, beispielsweise eines Fahrrades. Dient das elektronische Sicherungsmittel für ein Kraftrad, so kann die Energiequelle durch eine Batterie des Kraftrades gebildet sein, sofern vorhanden.

Gemäß einer vorteilhaften Ausführung der Sicherungseinheit ist der Schlosskörper bügelförmig ausgebildet, wobei der Aufnahmekörper zur Hindurchführung des bügelförmigen Schlosskörpers Durchgangsöffnungen aufweist. Alternativ ist der Schlosskörper flexibel ausgebildet, beispielsweise als Stahlseil, als Kette oder mit mehreren drehbeweglichen Gliedern versehen, wobei den Ausführungen des Schlosskörpers zwei Enden gemeinsam sind, die durch Durchgangsöffnungen im Aufnahmekörper hindurchgeführt werden können. Das Hindurchführen der Enden des Schlosskörpers durch die Durchgangsöffnungen erfolgt von einer Seite, die der Seite gegenüberliegt, an der der Grundkörper der Sicherungseinheit am Aufnahmekörper anliegt. Die Enden des Schlosskörpers werden dabei im Grundkörper verriegelt, so dass schließlich eine verliersichere, haltende Anordnung des Grundkörpers und des Schlosskörpers am Aufnahmekörper möglich ist.

Weiterführend weist der bügelförmige Schlosskörper Anformungen auf, die derart ausgebildet sind, dass der Aufnahmekörper zwischen dem Grundkörper und den Anformungen im Schließzustand der Sicherungseinheit eingefasst ist. Damit wird verhindert, dass der bügelförmige Schlosskörper durch die Durchgangsöffnungen im Aufnahmekörper weiter hindurchrutscht, und der Grundkörper und der Schlosskörper sind im Wesentlichen unbeweglich, starr mit dem Aufnahmekörper verbunden, wenn der Schlosskörper im Grundkörper verriegelt ist.

Der Aufnahmekörper ist beispielsweise zur Anordnung an einem Rahmen des Zweirades ausgebildet. Beispielsweise kann der Aufnahmekörper an dem Sattelrohr angebracht werden, und der bügelförmige Schlosskörper erstreckt sich in der Ebene des Rahmens des Zweirades, um bei der Benutzung des Zweirades möglichst nicht zu stören.

Im Grundkörper ist eine elektrische Verriegelungseinheit vorgesehen, mit der die Enden des bügelförmigen Schlosskörpers im Grundkörper verriegelbar sind. Die elektrische Verriegelungseinheit ist wie auch die Kommunikationseinheit mit dem Energiespeicher verbunden und kann über diesen elektrisch betätigt werden, um den Schlosskörper am Grundkörper zu verriegeln und freizugeben, und um wechselweise den Schließzustand oder den Öffnungszustand der elektronischen Sicherungseinheit herbeizuführen. Die elektrische Verriegelungseinheit kann beispielsweise einen Hubmagneten oder einen Stellmotor umfassen, um wenigstens einen Verriegelungsbolzen innerhalb des Grundkörpers zu bewegen, mit dem die Enden des Schlosskörpers formschlüssig im Grundkörper blockiert und freigegeben werden können. Die elektrische Verriegelungseinheit kann insbesondere angesprochen werden über die Kommunikationseinheit und damit über das handhaltbare Steuergerät.

Das handhaltbare Steuergerät ist gemäß einem weiterführenden Ausführungsbeispiel mittels eines Mobiltelefons gebildet, wobei die Kommunikationseinheit zur Kommunikation mit dem Mobiltelefon ausgebildet ist. Die Kommunikation zwischen der Kommunikationseinheit und dem handhaltbaren Steuergerät kann beispielsweise ein elektronisches Pairing zum Austausch geheimer elektronischer Schlüssel umfassen. Dabei ist es denkbar, dass das Mobiltelefon eine App aufweist und dass diese auf dem Mobiltelefon betreibbar ist, und über die schließlich die Sicherungseinheit zur Sicherung des Zweirades ansteuerbar ist, insbesondere um diese zwischen dem Schließzustand und dem Öffnungszustand hin und her zu schalten.

Gemäß einer Weiterführung der Kommunikation zwischen dem handhaltbaren Steuergerät und der Kommunikationseinheit kann ferner vorgesehen sein, dass die Kommunikationseinheit so ausgebildet ist, dass das Pairing ausführbar ist, wenn sich die Sicherungseinheit eine vorgebbare Mindestzeit im Öffnungszustand befindet. Der längere Öffnungszustand wird in der Regel nicht im gewöhnlichen Gebrauch der Sicherungseinheit herbeigeführt, da die Sicherungseinheit entweder in Anordnung am Aufnahmekörper geschlossen ist oder zum Abschließen des Zweirades ebenfalls geschlossen ist. Beispielsweise kann also vorgesehen sein, das Pairing erst dann ausführbar zu machen, wenn der Öffnungszustand deutlich länger vorliegt als beim regelmäßigen Gebrauch. Der länger vorliegende Öffnungszustand liegt dabei insbesondere dann vor, wenn sich die elektronische Sicherungseinheit im Besitz eines berechtigten Eigentümers befindet.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht eines Fahrrades mit einer elektronischen Sicherungseinheit mit den Merkmalen der vorliegenden Erfindung,
- Figur 2: die elektronische Sicherungseinheit mit dem Grundkörper und mit dem Schlosskörper, welche entnommen ist vom Aufnahmekörper, der sich in Anordnung an einem Rahmenteil des Zweirades befindet, und
- Figur 3: eine Ansicht des Schlosskörpers in Anordnung am Aufnahmekörper, wobei der Grundkörper vom Schlosskörper entnommen ist.

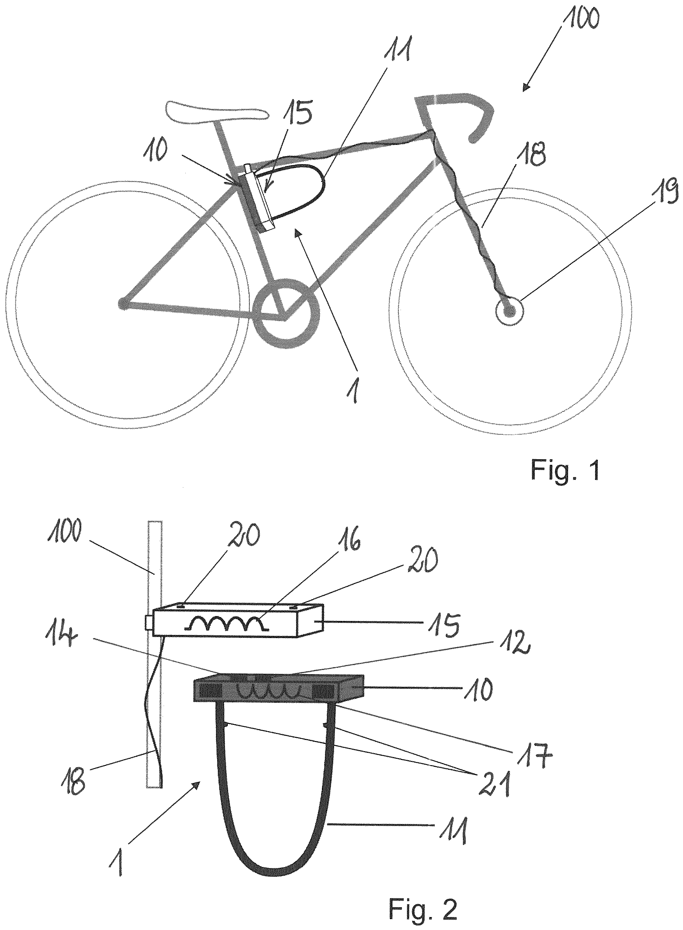

Figur 1 zeigt ein Zweirad 100 in Gestalt eines Fahrrades, und eine elektronische Sicherungseinheit 1 ist am Zweirad 100 angeordnet dargestellt. Die elektronische Sicherungseinheit 1 ist mit dem Grundkörper 10 und mit dem Schlosskörper 11 gezeigt, und der Grundkörper 10 und der Schlosskörper 11 befinden sich in Anordnung am Aufnahmekörper 15. Damit sichert die Sicherungseinheit 1 das Zweirad 100 im gezeigten Zustand nicht und befindet sich am Aufnahmekörper 15, um das Zweirad 100 zu bewegen.

Die Darstellung zeigt den Aufnahmekörper 15 in Anordnung am Rahmen des Zweirades 100, und das Zweirad 100 weist eine Energiequelle 19 in Form eines Nabendynamos auf. Zwischen der Energiequelle 19 und dem Aufnahmekörper 15 erstreckt sich eine elektrische Leitung 18, und wird das Zweirad 100 bewegt, so wird über den Aufnahmekörper 15 elektrische Energie aus der Energiequelle 19 zur Verfügung gestellt.

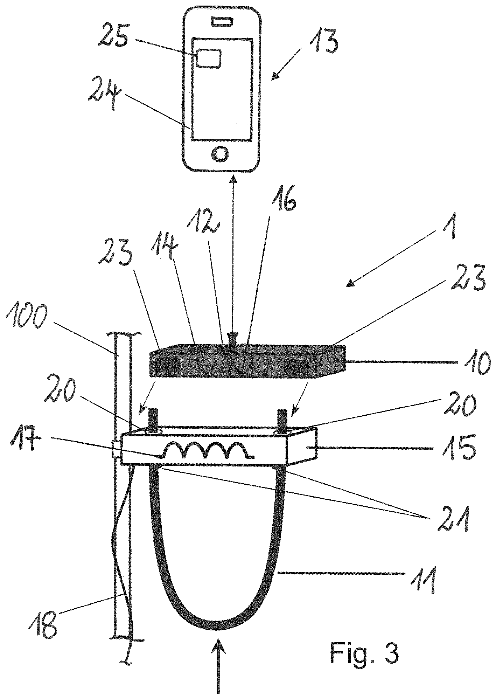

Die Figuren 2 und 3 zeigen die elektronische Sicherungseinheit 1 mit dem Grundkörper 10 und mit dem Schlosskörper 11, und es ist der Aufnahmekörper 15 in Anordnung am Zweirad 100 gezeigt, wobei das Zweirad 100 durch beispielsweise eine Sattelrohrstange wiedergegeben ist. Weiterhin ist die elektrische Leitung 18 abschnittsweise gezeigt, die aus dem Aufnahmekörper 15 herausgeführt ist.

Im Aufnahmekörper 15 befindet sich eine Ladeeinheit 16, die eine primäre Ladeeinheit 16 bildet, und im Grundkörper 10 befindet sich eine Ladeeinheit 17, die eine sekundäre Ladeeinheit 17 bildet. Wird der Grundkörper 10 plan an dem Aufnahmekörper 15 zur Anlage gebracht, so liegen sich die primäre Ladeeinheit 16 und die sekundäre Ladeeinheit 17 mit nur geringem Abstand gegenüber. Dadurch wird eine magnetische Kopplung erreicht, wodurch berührungslos in den Grundkörper 10 elektrische Energie übertragbar ist.

Der Grundkörper 10 weist weiterhin einen Energiespeicher 14 auf, der über die Ladeeinheiten 16 und 17 mit Energie aus der Energiequelle 19 geladen werden kann. Weiterhin befindet sich im Grundkörper 10 eine Kommunikationseinheit 12, die, wie Figur 3 im Detail zeigt, mit einem handhaltbaren Steuergerät 13 kommunizieren kann, welches Steuergerät 13 beispielhaft als Mobiltelefon 24 ausgebildet ist. Die Steuereinheit 13 kann beispielsweise auch ein sonstiges Sende-Empfangs-Gerät nach Art eines KfZ-Schlüssels oder dergleichen sein.

Der Schlosskörper 11 ist bügelartig ausgeführt und weist zwei freie Enden auf, die durch Durchgangsöffnungen 20 im Aufnahmekörper 15 hindurchgeführt werden können, wie in Figur 3 gezeigt. Um einen Anschlag zu bilden, weisen die Enden des bügelförmigen Schlosskörpers 11 Anformungen 21 auf, an die der Aufnahmekörper 15 anschlägt, wenn der Schlosskörper 11 durch die Durchgangsöffnungen 20 hindurchgeführt ist. Auf der gegenüberliegenden Seite ragen die Enden des bügelförmigen Schlossskörpers 11 aus dem Aufnahmekörper 15 hervor, und auf die Enden kann der Grundkörper 10 aufgesetzt werden, wie Figur 3 mit Pfeilen angedeutet zeigt.

Auf dem Mobiltelefon 24 ist eine App 25 betreibbar, die eine Applikation beschreibt, mit der mittels des Mobiltelefons 24 mit der Kommunikationseinheit 12 im Grundkörper 10 kommuniziert werden kann. Mit der App 25 kann über die Kommunikationseinheit 12 die Verriegelungseinheit 23 im Grundkörper 10 angesteuert werden, und jedem Ende des Schlosskörpers 11 ist eine Verriegelungseinheit 23 zugeordnet, um die Enden des bügelförmigen Schlosskörpers 11 innerhalb des Grundkörpers 10 zu blockieren oder freizugeben. Die Verriegelungseinheit 23 wird dabei ebenfalls über den elektrischen Energiespeicher 14 gespeist, der über die Ladeeinheiten 16 und 17 aufgeladen werden kann, wenn sich der Grundkörper 10 in Anordnung am Aufnahmekörper 15 befindet.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 100: Zweirad

- 1: elektronische Sicherungseinheit
- 10: Grundkörper
- 11: Schlosskörper
- 12: Kommunikationseinheit
- 13: Steuergerät
- 14: Energiespeicher
- 15: Aufnahmekörper
- 16: primäre Ladeeinheit
- 17: sekundäre Ladeeinheit
- 18: elektrische Leitung
- 19: Energiequelle
- 20: Durchgangsöffnung
- 21: Anformung
- 22: Rahmen
- 23: Verriegelungseinheit
- 24: Mobiltelefon
- 25: APP

## Patentansprüche

1. Elektronische Sicherungseinheit (1) für ein Zweirad (100), aufweisend einen Grundkörper (10) und einen Schlosskörper (11), der in einem Öffnungszustand vom Grundkörper (10) wenigstens teilweise lösbar ist und der in einem Schließzustand am Grundkörper (10) verriegelbar ist, und wobei im Grundkörper (10) eine elektronische Kommunikationseinheit (12) eingerichtet ist, die zur Kommunikation mit einem handhaltbaren Steuergerät (13) ausgebildet ist, mittels dem die Sicherungseinheit (1) wenigstens vom Schließzustand in den Öffnungszustand überführbar ist, und wobei im Grundkörper (10) ein Energiespeicher (14) zur Energieversorgung wenigstens der Kommunikationseinheit (12) vorgesehen ist, **dadurch gekennzeichnet, dass** die elektronische Sicherungseinheit (1) einen Aufnahmekörper (15) umfasst, wobei der Grundkörper (10) zur haltenden Aufnahme an eine erste Seite des Aufnahmekörpers (15) anordbar ist und durch den der Schlosskörper (11) zur Verriegelung am Grundkörper (10) von einer gegenüberliegenden zweiten Seite des Aufnahmekörpers (15) hindurchführbar ist, und wobei im Aufnahmekörper (15) eine Ladeeinheit (16) aufgenommen ist, über die der Energiespeicher (14) kabellos aufladbar ist, wenn der Grundkörper (10) am Aufnahmekörper (15) angeordnet ist.

2. Elektronische Sicherungseinheit (1) nach Anspruch 1, **dadurch gekennzeichnet, dass** im Grundkörper (10) eine Ladeeinheit (17) aufgenommen ist, wobei die Ladeeinheit (16) im Aufnahmekörper (15) eine primäre Ladeeinheit (16) und wobei die Ladeeinheit (17) im Grundkörper (10) eine sekundäre Ladeeinheit (17) bildet, welche Ladeeinheiten (16, 17) elektromagnetisch miteinander koppelbar sind.

3. Elektronische Sicherungseinheit (1) nach Anspruch 1 oder 2, **dadurch gekennzeichnet, dass** der Aufnahmekörper (15) über eine elektrische Leitung (18) mit einer Energiequelle (19) verbunden ist.

4. Elektronische Sicherungseinheit (1) nach Anspruch 3, **dadurch gekennzeichnet, dass** die Energiequelle (19) durch einen Dynamo des Zweirades (100) gebildet ist.

5. Elektronische Sicherungseinheit (1) nach einem der vorgenannten Ansprüche, **dadurch gekennzeichnet, dass** der Schlosskörper (11) bügelförmig ausgebildet ist und wobei der Aufnahmekörper (15) zur Hindurchführung des bügelförmigen Schlosskörpers (11) Durchgangsöffnungen (20) aufweist.

6. Elektronische Sicherungseinheit (1) nach einem der vorgenannten Ansprüche, **dadurch gekennzeichnet, dass** der bügelförmige Schlosskörper (11) Anformungen (21) aufweist, die derart ausgebildet sind, dass der Aufnahmekörper (15) zwischen dem Grundkörper (10) und den Anformungen (21) im Schließzustand der Sicherungseinheit (1) eingefasst ist.

7. Elektronische Sicherungseinheit (1) nach einem der vorgenannten Ansprüche, **dadurch gekennzeichnet, dass** der Aufnahmekörper (15) zur Anordnung an einem Rahmen (22) des Zweirades (100) ausgebildet ist.

8. Elektronische Sicherungseinheit (1) nach einem der vorgenannten Ansprüche, **dadurch gekennzeichnet, dass** im Grundkörper (10) eine elektrische Verriegelungseinheit (23) vorgesehen ist, mit der die Enden des bügelförmigen Schlosskörpers (11) im Grundkörper (10) verriegelbar sind.

9. Elektronische Sicherungseinheit (1) nach einem der vorgenannten Ansprüche, **dadurch gekennzeichnet, dass** das handhaltbare Steuergerät (13) mittels eines Mobiltelefons (24) gebildet ist, und dass die Kommunikationseinheit (12) zur Kommunikation mit dem Mobiltelefon (24) ausgebildet ist.

10. Elektronische Sicherungseinheit (1) nach einem der vorgenannten Ansprüche, **dadurch gekennzeichnet, dass** die Kommunikation zwischen der Kommunikationseinheit (12) und dem handhaltbaren Steuergerät (13) ein elektronisches Pairing zum Austausch geheimer elektronischer Schlüssel umfasst.

11. Elektronische Sicherungseinheit (1) nach Anspruch 10, **dadurch gekennzeichnet, dass** die Kommunikationseinheit (12) so ausgebildet ist, dass das Pairing ausführbar ist, wenn sich die Sicherungseinheit (1) eine vorgebbare Mindestzeit im Öffnungszustand befindet.

12. Zweirad (100) mit einer elektronischen Sicherungseinheit (1) nach einem der Ansprüche 1 bis 11, **dadurch gekennzeichnet, dass** der Aufnahmekörper (15) Bestandteil des Zweirades (100) ist.

## Claims

1. An electronic security unit (1) for a bicycle (100), comprising a base body (10) and a lock body (11), which can be at least partially unlocked from the base body (10) in an open state and which can be locked in a closed state at the base body (10), and wherein an electronic communication unit (12) is fitted in the base body (10), which communication unit is designed for communicating with a hand-held control device (13), by means of which the security unit (1) can be transferred at least from the closed state into the open state, and wherein an energy storage unit (14) for the energy supply at least of the communication unit (12) is provided in the base body (10), **characterised in that** the electronic security unit (1) comprises a receiving body (15), wherein the base body (10) can be arranged so as to be received in a retaining manner at a first side of the receiving body (15) and through which the lock body (11) can be passed from an opposite second side of the receiving body (15) for the purpose of locking to the base body (10), and wherein a charging unit (16) is accommodated in the receiving body (15), by means of which the energy storage unit (14) can be charged cable-free when the base body (10) is arranged on the receiving body (15).

2. The electronic security unit (1) according to claim 1, **characterised in that** a charging unit (17) is accommodated in the base body (10), wherein the charging unit (16) in the receiving body (15) forms a primary charging unit (16) and wherein the charging unit (17) in the base body (10) forms a secondary charging unit (17), which charging units (16, 17) can be coupled with one another electromagnetically.

3. The electronic security unit (1) according to claim 1 or 2, **characterised in that** the receiving body (15) is connected via an electrical line (18) to an energy source (19).

4. The electronic security unit (1) according to claim 3, **characterised in that** the energy source (19) is formed by a dynamo of the bicycle (100).

5. The electronic security unit (1) according to any one of the preceding claims, **characterised in that** the lock body (11) is constituted U-shaped and wherein the receiving body (15) comprises through-openings (20) for passing through the U-shaped lock body (11).

6. The electronic security unit (1) according to any one of the preceding claims, **characterised in that** the U-shaped lock body (11) comprises mouldings (21), which are constituted such that the receiving body (15) is enclosed between the base body (10) and the mouldings (21) in the closed state of the security unit (1).

7. The electronic security unit (1) according to any one of the preceding claims, **characterised in that** the receiving body (15) is designed to be arranged on a frame (22) of the bicycle (100).

8. The electronic security unit (1) according to any one of the preceding claims, **characterised in that** an electrical locking unit (23) is provided in the base body (10), with which locking unit the ends of the U-shaped lock body (11) can be locked in the base body (10) .

9. The electronic security unit (1) according to any one of the preceding claims, **characterised in that** the hand-held control device (13) is formed by means of a mobile telephone (24), and that the communication unit (12) is designed for communicating with the mobile telephone (24).

10. The electronic security unit (1) according to any one of the preceding claims, **characterised in that** the communication between the communication unit (12) and the hand-held control device (13) comprises an electronic pairing for the exchange of secret electronic codes.

11. The electronic security unit (1) according to claim 10, **characterised in that** the communication unit (12) is designed such that the pairing can be implemented when the security unit (1) is in the open state for a predetermined minimum time.

12. A bicycle (100) with any electronic security unit (1) according to any one of claims 1 to 11, **characterised in that** the receiving body (15) is a component part of the bicycle (100).

## Revendications

1. Unité de sécurité électronique (1) pour un deux-roues (100) comportant un corps de base (10) et un corps de serrure (11), qui peut être amovible au moins en partie dans un état d'ouverture du corps de base (10) et qui peut être verrouillé sur le corps de base (10) dans un état de fermeture et une unité de communication (12) est installée dans le corps de base (10) qui est constituée pour la communication avec un appareil de commande pouvant être tenu dans la main (13), au moyen duquel l'unité de sécurité (1) peut être convertie au moins de l'état de fermeture à l'état d'ouverture et un accumulateur d'énergie (14) étant prévu dans le corps de base (10) pour l'alimentation en énergie d'au moins l'unité de communication (12), **caractérisée en ce que** l'unité de sécurité électronique (1) comprend un corps de réception (15), le corps de base (10) pouvant être disposé pour un logement retenu sur un premier côté du corps de réception (15) et par lequel le corps de serrure (11) peut être passé depuis un deuxième côté opposé du corps de réception (15) pour verrouillage sur le corps de base (10) et une unité de charge (16) étant logée dans le corps de réception (15) par le biais de laquelle l'accumulateur d'énergie (14) peut être chargé sans câble, si le corps de base (10) est disposé sur le corps de réception (15).

2. Unité de sécurité électronique (1) selon la revendication 1, **caractérisée en ce qu'**une unité de charge (17) est logée dans le corps de base (10), l'unité de charge (16) formant dans le corps de réception (15) une unité de charge primaire (16) et l'unité de charge (17) une unité de charge secondaire (17) dans le corps de base (10), lesquelles unités de charge (16, 17) pouvant être couplées entre elles de manière électromagnétique.

3. Unité de sécurité électronique (1) selon la revendication 1 ou 2, **caractérisée en ce que** le corps de réception (15) est relié à une source d'énergie (19) par un câble électrique (18).

4. Unité de sécurité électronique (1) selon la revendication 3, **caractérisée en ce que** la source d'énergie (19) est formée par une dynamo du deux-roues (100) .

5. Unité de sécurité électronique (1) selon l'une quelconque des revendications précédentes, **caractérisée en ce que** le corps de serrure (11) est constitué en forme d'étrier et le corps de réception (15) comporte des ouvertures de passage (20) pour passer à travers le corps de serrure (11) en forme d'étrier.

6. Unité de sécurité électronique (1) selon l'une quelconque des revendications précédentes, **caractérisée en ce que** le corps de serrure (11) en forme d'étrier comporte des conformations (21) qui sont constituées de telle sorte que le corps de réception (15) est enchâssé entre le corps de base (10) et les conformations (21) à l'état de fermeture de l'unité de sécurité (1).

7. Unité de sécurité électronique (1) selon l'une quelconque des revendications précédentes, **caractérisée en ce que** le corps de réception (15) est constitué pour mise en place sur un cadre (22) du deux-roues (100).

8. Unité de sécurité électronique (1) selon l'une quelconque des revendications précédentes, **caractérisée en ce que** dans le corps de base (10), une unité de verrouillage électronique (23) est prévue avec laquelle les extrémités du corps de serrure (11) en forme d'étrier peuvent être verrouillées dans le corps de base (10).

9. Unité de sécurité électronique (1) selon l'une quelconque des revendications précédentes, **caractérisée en ce que** l'appareil de commande pouvant être tenu à la main (13) est formé au moyen d'un téléphone mobile (24) et **en ce que** l'unité de communication (12) est constituée pour la communication avec le téléphone mobile (24).

10. Unité de sécurité électronique (1) selon l'une quelconque des revendications précédentes, **caractérisée en ce que** la communication entre l'unité de communication (12) et l'appareil de commande pouvant être tenu à la main (13) comprend un appairage électronique pour l'échange de codes électroniques secrets.

11. Unité de sécurité électronique (1) selon la revendication 10, **caractérisée en ce que** l'unité de communication (12) est constituée de telle manière que l'appairage peut être exécuté si l'unité de sécurité (1) se trouve pendant une durée minimale prédéfinissable à l'état d'ouverture.

12. Deux-roues (100) avec une unité de sécurité électronique (1) selon l'une quelconque des revendications 1 à 11, **caractérisé en ce que** le corps de réception (15) fait partie constituante du deux-roues (100).
